Europäisches Patentamt

European Patent Office

Office européen des brevets

(11) Publication number : **0 501 614 A2**

# (12) EUROPEAN PATENT APPLICATION

(21) Application number : **92300826.2**

(22) Date of filing : **31.01.92**

(51) Int. Cl.$^5$ : **C09D 7/12, C09D 5/02**

(30) Priority : **21.02.91 GB 9103649**

(43) Date of publication of application :
**02.09.92 Bulletin 92/36**

(84) Designated Contracting States :
**DE DK ES FR GB IT NL SE**

(71) Applicant : **BP Chemicals Limited**
**Belgrave House 76 Buckingham Palace Road**
**London, SW1W 0SU (GB)**

(72) Inventor : **Kelsey, Jeffrey Richard**
**BP Chemicals Limited, Salt End**
**Hull HU12 8DS (GB)**

(74) Representative : **Krishnan, Suryanarayana**
**Kalyana et al**
**BP INTERNATIONAL LIMITED Patents &**
**Agreements Division Chertsey Road**
**Sunbury-on-Thames Middlesex TW16 7LN**
**(GB)**

(54) **Coalescing aids.**

(57)    This invention relates to emulsions comprising a polymer latex and an ester of keto-carboxylic acid of the formula :

$$RCO\text{-}(CH_2)_n\text{-}CO\text{-}R^2$$

in which $R^1$ is a $C_1$-$C_4$ alkyl group, $R^2$ is a $C_2$-$C_8$ alkyl group and n is an integer having a value of at least 2. The esters act as coalescing aids in the latex used as paints and coatings.

EP 0 501 614 A2

The present invention relates to the use of esters of keto-carboxylic acids as coalescing aids in paints and coatings.

Almost all polymer latices used commercially are required to form strong, coherent and adherent films when they are applied to a substrate surface and allowed to dry. Normally during storage and application, the latex particles must have freedom of movement in order to maintain stability of the latex and to facilitate application. After application, however, the latex particles must fuse into a continuous film. This is particularly important in the case of polymer latices used in paint formulations.

Paint formulations, therefore, contain in addition to the polymer latex, pigments and fillers, a film forming aid which is the so called "coalescing aid". The function of the coalescing aid is to act as a temporary plasticiser for the polymer in the latex, to soften the polymer and to lower the glass transition temperature (hereafter referred to as "Tg") of the latex below ambient temperature thereby aiding coalescence of the latex particles which in turn enable the formation of a continuous film. Moreover, the coalescing aid should be volatile enough to escape when the applied paint is allowed to dry but should evaporate more slowly than water which is the liquid carrier for the latex.

The coalescing aids should be stable in the presence of water and should be compatible with the other ingredients in the formulations such as pigments and fillers and most importantly with the polymer latex without adversely affecting the colloidal stability of the latex. Factors such as volatility, odour, toxicity, compatibility with aqueous systems and raw material costs have also to be considered. In general, a selection of volatile organic solvents have been widely used as coalesing aids.

Examples of the more commonly used solvents are the glycol ethers and glycol ether esters.

The choice of a specific coalescing aid for a particular latex will depend upon the nature of the latex and the desired use of the latex. An important consideration is to determine whether the coalescing aid is more likely to be in the aqueous or the polymer phase of the latex. Some of the coalescing aids are completely miscible with water in all proportions whilst others have limited miscibility. Usually the more polar aids are miscible with water.

The object of the present invention is to produce a simple coalesing aid which has the desirable characteristics of solvent power, limited water miscibility, volatility, odour and cost without substantially imparing any other desired properties in such an aid.

Accordingly, the present invention is an emulsion comprising a polymer latex and an ester of a keto-carboxylic acid of the formula:

$$R^1 - CO - (CH_2)_n - CO.OR^2 \qquad (I)$$

wherein

$R^1$ is a $C_1$-$C_4$ alkyl group,

$R^2$ is a $C_2$-$C_8$ alkyl group and

n is an integer which has a value of at least 2.

In the esters of formula (I), it is preferable that the group $R^1$ is a methyl, an ethyl group or any of the isomeric propyl groups; the group $R^2$ is preferably an ethyl, propyl, butyl, pentyl, or a hexyl group or isomeric analogues thereof.

n-Butyl esters of the keto-carboxylic acids, especially 4-oxo-valeric acid (levulinic acid) and 5-oxo-caproic acid, are the most preferred.

The esters of keto-carboxylic acids in the present invention perform the function of a coalescing aid.

A mixture of esters of formula (I) can be used as coalescing aids according to the present invention.

The specific amount of the coalescing aid in the emulsion will depend upon:

a) the nature of the polymer in the latex, especially its Tg, minimum film forming temperature (hereafter referred to as "MFFT") and hardness;

b) the amount of pigment and filler in the emulsion; and

c) the end use of the emulsion.

The amount of the coalescing aid is suitably from 0.5 to 10% w/w in the emulsion, preferably from 1 to 6% w/w of the emulsion. The higher concentrations in this range are more suitable for latices based on polymers with a high Tg.

Specific examples of commercial latices in which the coalescing aid of the present invention can be used to advantage include: copolymers containing vinyl acetate (ca. 70%) and vinyl versatate (ca. 30%); vinyl acrylate (ca. 80%) and butyl acrylate (ca. 20%); vinyl acetate, vinyl chloride and ethylene; and styrene (ca. 60%) and acrylates such as butyl acrylate (ca. 40%).

The present invention is further illustrated with reference to the following Examples and Comparative Tests:

The study of the effectiveness and efficiency of the coalescing aid of the present invention in latex formulations was conducted by comparison with the performance of commercial coalescing aids. The minimum film forming temperature (MFFT) was determined by adding the respective coalescing aids to the latices/emulsions in several concentrations. Each blend was then applied to an aluminium temperature gradient platform. Thermometers were attached to the platform in order to measure the temperature gradient from end to end. The total plate was enclosed in a plastic box through which dry nitriogen was passed to avoid water condensation.

On drying, a clear film was formed at the warmer end, and a white, cloudy or frosty film formed at the colder end. The point of transition was noted and reported as the MFFT.

The coalescing aids tested were:

Texanol*: 2,2,4-Trimethyl-1,3-pentanediolmonoisobutyrate (ex Eastman Kodak)

Coasol B*: 'Nylonate' ester (ie esters of adipic, glutaric and succinic acids which may contain small amounts of 5-oxo-caproic acid and 4-oxo-valeric acid, ex Chemoxy)

Butyl Glycol Ether: $C_4H_9CH_2CH_2OH$ (ex BP Chemicals Ltd)

n-Butyl 5-oxo-caproate: $CH_3 CO (CH_2)_3 CO OC_4H_9$

    * Registered Trade Mark.

The commercial samples of the latex/emulsion used in all cases were:

Vinamul* 3459 - A vinyl acetate/vinyl chloride/ethylene copolymer (ex Vinyl Products) having an MFFT of 12.5°C

Neocryl* XK62 - a styrene/acrylate copolymer (ex ICI) having an MFFT of 30°C.

    * Registered Trade Mark.

The results of the experiments are tabulated below:

| Coalescing Aid | Concentration (%w/w) | MFFT (°C) of Latex Tested | |
|---|---|---|---|
| | | Vinamul 3459 | Neocryl XK62 |
| Texanol** | 1.0 | 7.2 | 20.5 |
| | 2.0 | 3.9 | 11.2 |
| | 3.0 | 0.7 | 7.9 |
| | 4.0 | -1.5 | 2.4 |
| Coasol B** | 1.0 | 6.6 | |
| | 2.0 | 2.0 | |
| | 3.0 | -1.2 | |
| Butyl glycol ether** | 1.0 | | 22.5 |
| | 2.0 | | 15.0 |
| | 3.0 | | 7.8 |
| | 4.0 | | 1.0 |
| n-Butyl-5-oxo-caproate | 1.0 | 4.5 | 15.8 |
| | 2.0 | 1.1 | 7.7 |
| | 3.0 | -1.7 | -2.8 |

** Not according to the invention

| Coalescing Aid | Concentration (%w/w) | MFFT (°C) of Latex Tested | |
|---|---|---|---|
| | | Vinamul 3459 | Neocryl XK62 |
| Butyl Levulinate | 1 | | 16.5 |
| | 2 | | 9.0 |
| | 3 | | 1.0 |
| | 4 | | <-1 |
| | 5 | | <-1 |
| Isobutyl Levulinate | 1 | | 16 |
| | 2 | | 8.5 |
| | 3 | | 1.5 |
| | 4 | | <-4 |
| | 5 | | <-1 |

The above results show that the performance of the keto-carboxylic esters of the present invention is superior to those of the commercially used aids.

## Claims

1. An emulsion comprising a polymer latex and an ester of a keto-carboxylic acid of the formula:

$$R^1\text{-CO-}(CH_2)_n\text{-CO.OR}^2 \qquad (I)$$

wherein
    $R^1$ is a $C_1$-$C_4$ alkyl group,
    $R^2$ is a $C_2$-$C_8$ alkyl group and
    n is an integer which has a value of at least 2.

2. An emulsion according to Claim 1 wherein in the ester $R^1$ is a methyl, ethyl or any isomeric propyl group, and $R^2$ is an ethyl, propyl, butyl, pentyl or a hexyl group or isomeric analogues thereof.

3. An emulsion according to Claim 1 or 2 wherein the ester is the n-butyl ester of 4-oxo-valeric acid or 5-oxo-caproic acid.

4. An emulsion according to any one of the preceding Claims wherein the amount of ester is from 0.5 to 10% w/w of the total emulsion.

5. An emulsion according to any one of the preceding Claims wherein the polymer in the emulsion is a copolymer of:
    a) vinyl acetate and vinyl versatate;
    b) vinyl acrylate and butyl acrylate;
    c) vinyl acetate, vinyl chloride and ethylene; or
    d) styrene and butyl acrylate.

6. An emulsion according to Claim 5 wherein the relative proportions of the components w/w in the copolymer are:
    a) vinyl acetate (ca. 70%) and vinyl versatate (ca. 30%);
    b) vinyl acrylate (ca. 80%) and butyl acrylate (ca. 20%); or
    d) styrene (ca. 60%) and butyl acrylate (ca. 40%).

4